# DEMANDE DE BREVET EUROPEEN

(11) **EP 2 431 240 A1**
(43) Date de publication de la demande: **21.03.2012**
(21) Numéro de dépôt: 08300282.4
(22) Date de dépôt: 20.11.2008
(51) Int. Cl.: B60S 5/02

(54) **Dispositif transportable de stockage et de distribution d'hydrocarbures**

(30) Priorité: 20.11.2007 FR 0759177; 25.07.2008 FR 0855104
(71) Demandeur: The Rompetrol Group NV TRG, 1077 XX Amsterdam (NL)
(72) Inventeur: Lecina, Gérard, 31450 Fourquevaux (FR)
(74) Mandataire: Rhein, Alain

(57) **Abrégé**

La présente invention concerne un dispositif (1) transportable de stockage et de distribution d'hydrocarbures, comprenant une enceinte pourvue d'un espace de stockage (5) desdits hydrocarbures relié au travers de moyens de pompage à au moins un automate (6) de distribution, ledit espace de stockage (5) comprenant au moins en partie basse au moins un bac de réception (9) d'au moins une cuve (7) contenant au moins un premier hydrocarbure, caractérisé par le fait qu'il comprend des moyens (10) ceinturant ladite cuve (7) au travers de panneaux d'une hauteur supérieure aux dimensions de ladite cuve (7) de manière à former une fosse autour de celle-ci.

## Description

La présente invention entre dans le domaine du stockage et de la distribution d'hydrocarbures.

L'invention concerne plus particulièrement un dispositif transportable de stockage et de distribution d'hydrocarbures.

Un tel dispositif transportable consiste en une station permettant à un utilisateur de s'approvisionner en carburant. Cette station est prévue transportable afin d'équiper un lieu en dehors des réseaux de distribution existants, en raison de son isolement, de son utilisation périodique ou temporaire, etc.

De manière connue, une station transportable se présente sous la forme d'un conteneur ou container, dont la taille normalisée lui permet d'être transporté et manutentionné aisément, notamment sur le plateau d'un véhicule de transport terrestre de type semi-remorque.

Facile à transporter, cette station peut être rapidement déployée dans un espace succinctement préparé. Il suffit d'une zone plane ou préalablement préparée, notamment au travers du dépôt d'une couche de sable ou tout autre matériau aplani sur lequel reposera ladite station. On peut aussi disposer un film étanche sous la station ou sous la couche de sable afin de protéger le sol en cas de fuite.

Ladite zone doit avoir une taille suffisante pour accueillir la station une fois déployée. En effet, outre le conteneur, une piste s'étend obligatoirement le long de ce dernier. Cette piste joue le rôle de pont pour les véhicules à approvisionner et sert de collecteur pour les eaux de pluie ainsi que les éventuels hydrocarbures ou résidus renversés en cours de distribution.

A ce titre, ladite station transportable comprend un conteneur enfermant des moyens de distribution, de type automate équipé d'une pompe volumétrique, reliés à des moyens de stockage des hydrocarbures. Ces derniers se présentent sous la forme d'au moins une cuve, de type citerne cylindrique ou analogue, à simple ou double paroi, compartimentée au moyen de murs intérieurs.

On notera que dans le cas d'une cuve à paroi simple, il est nécessaire de disposer en dessous un bac dont la taille correspond au volume total de ladite cuve. Ce bac est destiné à récupérer les hydrocarbures en cas de fuite. Pour des raisons de sécurité, un tel bac est prévu résistant à de très hautes températures, notamment au travers d'une structure composite ou de matériaux métalliques.

Les compartiments ménagés au sein de la cuve reçoivent différents types d'hydrocarbures appelés « produit blanc ». Un produit blanc peut être de première catégorie, incluant les essences dite « super » ou « sans-plomb », ou bien de seconde catégorie, à savoir les fiouls et gasoil. Si les produits de seconde catégorie peuvent être stockés dans un espace aérien, les règles de sécurité concernant les produits de première catégorie imposent de disposer la cuve de stockage de manière enterrée ou au sein d'une fosse maçonnée.

Les dispositifs de l'état de la technique ne présentent donc aucune solution aux nouvelles réglementations en vigueur du point de vue de la sécurité.

De plus, les matériaux constituant lesdits conteneurs connus ne sont pas résistants en cas de choc, notamment s'ils sont heurtés par un véhicule.

L'invention a pour but de pallier les inconvénients de l'état de la technique en proposant un dispositif transportable de stockage et de distribution d'hydrocarbures, comprenant une enceinte pourvue d'un espace de stockage desdits hydrocarbures relié au travers de moyens de pompage à au moins un automate de distribution, ledit espace de stockage comprenant au moins en partie basse au moins un bac de réception d'au moins une cuve contenant au moins un premier hydrocarbure.

Un tel dispositif se caractérise par le fait qu'il comprend des moyens ceinturant ladite cuve au travers de panneaux d'une hauteur supérieure aux dimensions de ladite cuve de manière à former une fosse autour de celle-ci.

En effet, l'invention offre une solution au travers du stockage par une cuve spécifique aux hydrocarbures de première catégorie entourée entièrement par des parois formant une fosse au sens de la législation. De plus, le dispositif selon l'invention garantit une sécurité accrue en cas de choc au niveau de l'enceinte dudit dispositif.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue en coupe latérale d'un dispositif selon l'invention en position déployée ; et
- la figure 2 est une vue latérale dudit dispositif.

La présente invention concerne un dispositif 1 transportable de stockage et de distribution d'hydrocarbures. Déployé sur site, il fera office de station service.

Un tel dispositif 1 se présente sous la forme d'un conteneur ou container 2, de type standard, à coin ISO. Un tel conteneur 2 offre une manutention et un transport aisés, notamment sur plate-forme de camion semi-remorque.

A l'emplacement choisi, la station est déployée avec latéralement au moins une piste 3 destinée à recevoir les véhicules 13 à approvisionner en carburant. Cette piste 3 sert de pont sur lequel roulent lesdits véhicules 13 et y stationnent le temps de distribution. Selon le mode de réalisation visible sur les figures, une seule piste 3 est disposée en partie frontale de la station. Selon un autre mode de réalisation, deux pistes peuvent être déployées de par et d'autre dudit conteneur 2. Des rampes 14 sont ajoutées de part et d'autre de la piste 3 pour la montée et la descente des véhicules 13, ainsi que l'accès aux personnes à mobilité réduite. Cette piste 3 est prévue démontable.

De manière avantageuse, une telle piste 3 sert aussi de moyen de récupération des hydrocarbures déversés en cas de fuite ou lors de la distribution, ainsi que des eaux usées de ruissellement. Pour ce faire, ladite piste 3 comprend au moins une pente inclinée de manière à canaliser des fluides par ruissellement en vue de leur stockage et traitement éventuel.

De plus, peut être déployée au dessus de la piste 3 une couverture sous forme d'un auvent 4, prévu escamotable ou démontable. Cet auvent 4 peut aussi prévoir des moyens de canalisation des précipitations, directement vers le réseau pluvial, ou vers un stockage avec les eaux hydrocarburées en vue de leur traitement, notamment par décantation.

Le dispositif 1 selon l'invention comprend une enceinte pourvue d'un espace de stockage 5 desdits hydrocarbures. Cette enceinte peut avantageusement être constituée par ledit conteneur 2. Ledit espace de stockage 5 est relié au travers de moyens de pompage (non représentés) à au moins un automate 6 de distribution.

Dans le cadre de l'invention, ledit automate 6 comprend au moins un pistolet 15 de distribution ainsi qu'un débitmètre calculant et affichant instantanément la quantité d'essence distribuée. Cet automate 6 peut aussi comprendre des moyens de paiement, par carte bancaire ou analogue.

L'espace de stockage 5 enferme au moins une cuve 7. De préférence, selon le mode préférentiel mais non limitatif de l'invention, le dispositif 1 comprend trois cuves 7. En effet, il a été imaginé, au lieu de diviser une seule cuve en compartiments recevant différents types d'hydrocarbure, de multiplier le nombre de cuves, chacune recevant un type d'hydrocarbure. Ainsi, une cuve est réservée à au moins un type d'hydrocarbure, de première ou seconde catégorie.

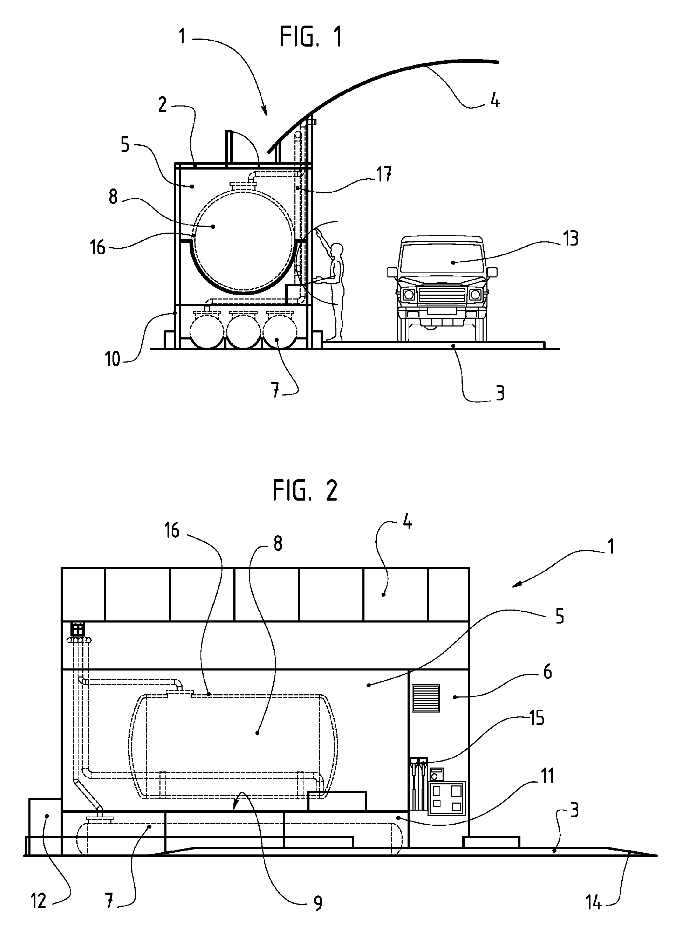

Le dispositif 1 selon l'invention comprend au moins une cuve 7 située en partie basse dudit espace de stockage 5. Cette cuve basse 7 est destinée à recevoir au moins un produit blanc de première catégorie. Dans le mode de réalisation visible sur la figure 2, le dispositif 1 comprend trois cuves 7 en partie basse.

Une telle cuve 7 peut être compartimentée afin de recevoir plusieurs produits blancs de première, mais aussi de première et deuxième catégorie. Selon le mode de réalisation visible sur la figure, chaque cuve 7 n'est pas compartimentée.

De plus, l'espace de stockage 5 peut comprendre en partie supérieure au moins une cuve supplémentaire 8 de stockage d'au moins un second hydrocarbure. De préférence, plusieurs hydrocarbures peuvent être contenus dans la cuve supplémentaire 8, au travers de compartiments ménagés à l'intérieur par des parois verticales. Cette cuve est fixée sur une structure adaptée, au-dessus de la (ou les) cuve(s) 7.

De plus, ladite cuve supplémentaire 8 peut comprendre une enveloppe 16 à double paroi, s'affranchissant de l'obligation d'un bac sous-jacent d'un volume équivalent.

A l'inverse, un bac 9 est prévu en parti basse de l'espace de stockage 5, d'un volume équivalent à celui de ladite cuve 7, afin de récupérer l'intégralité de son contenu en cas de fuite. Un tel bac 9 peut comprendre un fond surmonté de parois latérales entourant ladite cuve 7. De plus, il peut avantageusement être constitué d'un matériau résistant à de très hautes températures, en cas d'incendie.

Ainsi, la cuve basse 7 n'a pas nécessairement une enveloppe à double paroi, mais peut être constituée par une enveloppe simple.

On notera que la cuve 7 et la cuve supplémentaire 8 peuvent être de toute forme, particulièrement cubique, cylindrique ou ovoïde. Leurs dimensions peuvent varier en fonction de leur disposition à l'intérieur dudit espace de stockage 5. Elles peuvent être disposées dans tout sens, préférentiellement dans la longueur du conteneur.

Une caractéristique essentielle de la présente invention réside dans le fait que le dispositif 1 comprend des moyens 10 ceinturant au moins ladite cuve 7. Ces moyens 10 entourent la cuve 7 de manière à former une fosse autour de celle-ci. Cette fosse permet donc de stocker au sein de ladite cuve 7 un produit blanc de première catégorie, sans nécessiter d'enterrement ou de stockage souterrain.

Les moyens 10 créent donc une ceinture périphérique à l'intérieur et/ou à l'extérieur de l'enceinte, au niveau de la partie basse des moyens de stockage 5. Pour ce faire, des panneaux 11 sont agencés sur une hauteur supérieure aux dimensions de ladite cuve 7. Plus précisément, la hauteur desdits panneaux 11 est supérieure ou égale à la section de la cuve 7. Cette dernière est donc entièrement entourée par les moyens 10.

Préférentiellement, mais non limitativement, les panneaux 11 dépassent la hauteur de la cuve 7 d'au moins 20 centimètres.

A ce titre, ceux-ci peuvent constituer une protection contre des accidents dus aux chocs occasionnés par un véhicule ainsi qu'en cas d'incendie. C'est pourquoi les moyens 10 sont constitués par tout type de matériau coupe-feu et résistant à des températures très élevées, mais tout en ayant une résistance à l'encaissement de chocs.

Ainsi, selon un mode préférentiel mais non limitatif de réalisation, chaque panneau 11 se présente sous la forme de blocs en béton. Ces blocs peuvent être prévus amovibles de façon à être disposés en périphérie dudit espace de stockage 5. Ils sont rendus solidaires intérieurement ou extérieurement à ladite enceinte, plus particulièrement au niveau de l'espace de stockage 5. Pour ce faire, des moyens de fixation sont envisagés au contact de la paroi de l'enceinte de manière à maintenir les blocs entre eux pour former un panneau 11.

Comme évoqué précédemment, les blocs peuvent aussi être constitués de béton et solidarisés entre eux de manière à former une fosse maçonnée autour de ladite enceinte.

Selon une autre caractéristique, une dalle peut être coulée sous l'enceinte, plus particulièrement sous l'espace de stockage 5, de manière à fermer en partie basse la fosse ménagée par les moyens 10. Ainsi rendue étanche, cette fosse peut constituer ledit bac 9 précédemment évoqué.

De plus, cette fosse peut être remplie d'un matériau isolant à haute résistance thermique, notamment ignifugé, de manière à noyer les cuves 7. De type vermiculite ou analogue, ce matériau limite les risques de fuite tout en offrant une sécurité accrue en cas d'incendie.

D'autres moyens peuvent être envisagés pour limiter les risques d'incendie ou d'accident, voir entraver la progression d'un sinistre. Par exemple, le dispositif 1 selon l'invention peut être équipé d'extincteurs à déclenchement automatique.

Selon un mode de réalisation particulier, les moyens 10 peuvent s'étendre extérieurement à ladite enceinte de manière à former un bac de séparation 12. Les panneaux 11 se prolongent sur au moins un côté de l'enceinte. Un fond est ajouté afin de rendre étanche ledit bac 12. Ce dernier peut recevoir les eaux de ruissellement et/ou hydrocarburées à partir de la piste 3 ou du reste du dispositif 1. Une décantation des hydrocarbures peut avoir lieu, ces derniers surnageant par rapport à l'eau qui peut être évacuée en partie basse.

De plus, situé à l'extérieur de l'enceinte, un tel bac de séparation 12 est facilement accessible en vue de son entretien par un utilisateur, de la récupération des hydrocarbures et eaux d'égouttage, etc.

De manière générale, les eaux de ruissellement peuvent être canalisées ou non pour un rejet direct vers un réseau pluvial tandis que les eaux hydrocarburées, collectées sur les pistes de distribution, sont drainées vers un séparateur d'hydrocarbure et traitées avant de rejoindre ledit réseau d'eau pluvial.

Un autre avantage de la présente invention réside dans le fait que les cuves 7, situées en partie basse de l'espace de stockage 5, peuvent être directement remplies depuis la citerne du camion d'approvisionnement par déversement. Ainsi, les hydrocarbures peuvent s'écouler par gravité depuis le transporteur vers les cuves 7, sans nécessiter l'utilisation de pompe antidéflagrante. Pour ce faire, chaque cuve 7 peut comprendre un col de cygne sur lequel vient se brancher en direct un camion citerne. De plus, lors du remplissage des cuves 7, il est alors possible de remplir la cuve supplémentaire 8 au moyen des moyens de pompages généralement inclus sur ledit camion.

Un mode de remplissage conventionnel peut aussi être envisagé comme sur les figures. Les tuyaux 17 débouchent alors en hauteur du dispositif 1 pour un approvisionnement par pompage depuis le camion citerne.

Bien entendu, l'invention n'est pas limitée aux exemples illustrés et décrits précédemment qui peuvent présenter des variantes et modifications sans pour autant sortir du cadre de l'invention.

## Revendications

1. Dispositif (1) transportable de stockage et de distribution d'hydrocarbures, comprenant une enceinte pourvue d'un espace de stockage (5) desdits hydrocarbures relié au travers de moyens de pompage à au moins un automate (6) de distribution, ledit espace de stockage (5) comprenant au moins en partie basse au moins un bac de réception (9) d'au moins une cuve (7) contenant au moins un premier hydrocarbure, **caractérisé par le fait qu'**il comprend des moyens (10) ceinturant ladite cuve (7) au travers de panneaux (11) d'une hauteur supérieure aux dimensions de ladite cuve (7) de manière à former une fosse autour de celle-ci.

2. Dispositif (1) selon la revendication 1, **caractérisé par le fait que** la hauteur desdits panneaux (11) est supérieure ou égale à la section de ladite cuve (7).

3. Dispositif selon l'une quelconque des revendications 1 ou 2, **caractérisé par le fait que** chaque panneau (11) se présente sous la forme de blocs amovibles disposés en périphérie dudit espace de stockage (5).

4. Dispositif (1) selon la revendication 3, **caractérisé par le fait que** lesdits blocs sont composés de béton de manière à former une fosse maçonnée.

5. Dispositif (1) selon l'une quelconque des revendications 1 à 4, **caractérisé par le fait que** ladite fosse est remplie d'un matériau isolant à haute résistance thermique, notamment ignifugé, de manière à noyer ladite cuve (7).

6. Dispositif (1) selon l'une quelconque des revendications 1 à 5, **caractérisé par le fait que** ledit espace de stockage (5) comprend au moins en partie supérieure au moins une cuve (8) supplémentaire de stockage d'au moins un second hydrocarbure.

7. Dispositif (1) selon l'une quelconque des revendications 1 à 6, **caractérisé par le fait que** ladite cuve supplémentaire (8) comprend des doubles parois.

8. Dispositif (1) selon l'une quelconque des revendications 1 à 7, **caractérisé par le fait que** lesdits moyens (10) s'étendent extérieurement à ladite enceinte de manière à former un bac de séparation (12).

9. Dispositif (1) selon l'une quelconque des revendications précédentes, **caractérisé par le fait qu'**il comprend trois cuves (7) en partie basse.

10. Dispositif (1) selon l'une quelconque des revendications précédentes, **caractérisé par le fait que** ladite cuve (7) est divisée en compartiments.
